# EUROPEAN PATENT SPECIFICATION

(11) **EP 4 117 491 B1**
(45) Date of publication and mention of the grant of the patent: **29.05.2024**
(21) Application number: 21723364.2
(22) Date of filing: 08.03.2021
(51) Int. Cl.: A47J 31/44

(54) **POD ESPRESSO MACHINE, WITH SEPARATE WASTE COLLECTION OF THE POD COMPONENTS**
KAPSELESPRESSOMASCHINE MIT SEPARATER ABFALLSAMMLUNG DER KAPSELTEILE
MACHINE À EXPRESSO À DOSETTE, AVEC COLLECTE SÉPARÉE DES DÉCHETS DES COMPOSANTS DE DOSETTE

(30) Priority: 09.03.2020 IT 202000004957
(43) Date of publication of application: 18.01.2023
(73) Proprietor: C2C Invest S.r.l., 25128 Brescia (IT)
(72) Inventor: MAGRIN, Fabio, Brescia (IT)
(74) Representative: Faggioni, Marco
(86) International application number: PCT/IB2021/051911
(87) International publication number: WO 2021/181244

(56) References cited:
- WO-A1-2011/051867
- WO-A1-2014/078893
- FR-A1- 2 916 126

## Description

### FIELD OF THE INVENTION

The present invention relates to a pod machine for preparing espresso, with separate waste collection of the pod different components. Particularly, the invention relates to an espresso machine of this type, which provides for an effective automatic separation of the pod coffee content and the pod empty body, thus allowing the user to dispose of these two components promptly and easily, in a separate manner.

### STATE OF THE PRIOR ART

As known, machines using pre-packaged pods containing ground coffee dosed for one espresso have been widespread since many years in the field of home and professional espresso machines. Said pods are currently available in a wide variety of types, as they ensure the best preservation over time of the ground coffee aromas, when made of aluminium or plastic. As a matter of fact, the ground coffee is prepared and packaged into pods in plants apt to preserve its natural aroma and freshness, through processing under inert gas to prevent the coffee from oxidation while being processed and subsequently stored.

However, whilst offering such unmatched quality, all the pod espresso machines currently available on the market raise the significant drawback of their used pods disposal as general waste, which drawback is now particularly felt precisely because of this type of machines being widespread, and of the consequent huge number of used pods they produce, on a global level, to be necessarily disposed of as general waste. In practice, the essential problem is that the user has substantially no possibilities to separate the two components of a used pod, i.e., the spent coffee dregs and the pod empty body, which on the contrary would both be susceptible of 100% recycling, respectively as organic material and as metal/plastic material to be recycled within the production process.

To overcome this problem, several alternatives have been attempted, all currently available on the market, though none of them resulted to be really effective.

A first solution involved changing the pod shell material by replacing the aluminium or plastic materials with biodegradable materials thus realizing so-called pads, or by making biodegradable pods by use of biodegradable plastic material, e.g., PLA. Such solution has proven to be satisfactory for the possibility of recycling the used pod as a whole, as compostable material, but it remains rather critical with respect to the pod long-term shelf-life, especially under high humidity and temperature conditions. In such conditions, in fact, the ground coffee organoleptic properties would undergo a gradual degradation, leading to a distinctly worsened taste of the espresso drink thus produced, that eventually causes a reduced shelf-life of such product compared to that of traditional pods.

Besides, when using biodegradable pods and pads, it shall be considered the often not negligible drawback of biodegradable materials releasing different substances to the ground coffee. As a matter of fact, such biodegradable materials undergo an initial "degradation", when subjected to thermal stress at high temperatures and pressures - as typically occurs in the infusion process when the hot water passes therethrough at high pressure - with partial release of their components, and consequent contamination of the produced espresso drink by the characteristic substances contained in the biodegradable materials - e.g. cellulose from the pad filter paper, chlorine as a whitener of the paper itself, and the like. Accordingly, the technology of compostable or biodegradable material has shown to be less effective in principle for storage, as it shortens the shelf-life of pods or pads produced therewith: as a matter of fact, the amount of material being the same of aluminium or PP, they degrade much faster, also releasing into the espresso drink different compounds, which are not necessarily harmful to health but often sufficient to alter the taste of the coffee drink.

A second solution aimed instead at promoting a used pod collection service, variously encouraging users through economic means and promotional activities, to collect all used pods at the manufacturer and to provide here for the separation of the components and their recycling through industrial methods. Such a solution has proven to be efficient as regards the quality of recovery, but completely unsatisfactory, instead, as regards the percentage of the product actually recycled, relative to the total amount of sold product. As a matter of fact, being substantially based on the users' voluntary commitment to the collection project, such a solution is implemented only by those who are sensitive to the ecological problem, which now still represent a large minority, with resultant recovery percentages largely lower than 50% and therefore completely unsatisfactory.

A third solution finally provides for the withdrawal from pod machines in favour of the adoption of machines that use coffee beans, grinded at the moment of use. Such a solution has considerably developed in recent years, indeed, as it ensures an excellent opportunity of recovering spent coffee dregs as compostable organic fraction through complete elimination of any pod. However, the quality level of the coffee beans stored inside the machine tank cannot compare to that of the ground coffee sealed into aluminium pods, since the heat produced by the espresso machine itself and the same ambient air inside the tank promote the coffee gradual oxidation and the dispersion of the most volatile aromas. The quality of the espresso drinks produced by such machines shows a markedly downward trend over time - starting from the highest quality at each new load of fresh coffee beans - which is the more noticeable the longer the coffee beans remain in the tank, i.e., the lower is the daily consumption of coffee in the single machine.

On the other hand, the espresso machine according to such third solution is now also criticized from an ecological point of view since it has a higher overall carbon footprint, compared to pod machines, related to the machine itself energy consumption in standard operation. To the present day, the combination of such different drawbacks caused the espresso machines which use coffee beans to be widely used only among those users who make large use of such machine, as for example in offices, where a new coffee load runs out in a relatively short time and therefore the quality deterioration is low.

A last solution, disclosed in WO2011/051867, provides for the use of a distinct separating device placed inside the machines dispensing drinks from pods, which separates the pod content from the pod body. Such a separating device takes charge of the pod after the drink has been dispensed, by removing the wet content therefrom. In actual fact, such a solution had no practical application on the market especially because, in addition to the complication of requiring a double movement and relative positioning of the pod - first in the drink delivery machine and then in the separating device - it entails a drawback to the extent that the pod content is already wet with the working liquid when it is removed from the pod. It is therefore impossible to obtain an accurate cleaning of the pod, particularly in the case of fine powders such as coffee, thus making the application substantially useless, since the empty pods still containing part of their unremoved content again are a special waste that cannot be directly recycled without a further washing operation.

Therefore, there still remains the unsolved problem, now addressed by the present invention, of providing an espresso machine of new concept, which could combine the high quality and long shelf-life proper to the pod machine coffee, with a more environmentally friendly approach, i.e., with the possibility of separately recycling the two components of the pod, totally regardless of the willingness of users to separate the components themselves or to join a recovery program for the collection of used pods of the respective manufacturers.

Addressing this problem, a first object of the invention is therefore to provide a pod espresso machine wherein the spent coffee dregs and the relative containing pod body can be collected separately, so that the user can easily and properly dispose of those two separated materials.

Another object of the invention is then to provide a pod espresso machine wherein any possible interference is avoided between a wet area of the machine, where the preparation of the coffee drink occurs, and a dry area of the same machine, where a separation between the ground coffee and the containing pod is carried out.

### SUMMARY OF THE INVENTION

This problem is solved, and the object achieved, by means of an espresso machine having the features disclosed in claim 1. Other preferred features of said espresso machine are disclosed in the secondary claims.

### BRIEF DESCRIPTION OF THE DRAWINGS

Further features and advantages of the espresso machine according to the present invention will however become more evident from the following detailed description of a preferred embodiment thereof, provided purely by way of non-limiting example and illustrated in the attached drawings, wherein:
Fig. 1 is a schematic side view with functional blocks of a pod espresso machine according to the present invention, illustrating the step of inserting a pod into a moving drawer;
Fig. 2 is an enlarged view of the moving drawer of Fig. 1 alone, illustrating the operation of locking the pod in a fixed position;
Fig. 3 is a view similar to Fig. 2, illustrating the step of opening the bottom of the pod;
Figs. 4, 5 and 6 are views similar to Fig. 2 illustrating the step of gradually emptying the ground coffee contained in the pod into a loading hopper of the extraction block (the latter being only represented in Fig. 5 for the sake of simplicity);
Figs. 7 and 8 are views similar to Fig. 2, illustrating the step of gradually squashing the pod;
Fig. 9 is a view similar to Fig. 1, illustrating the step of ejecting and discharging the pod body once it has been emptied of ground coffee and squashed;
Fig. 10 is a front elevation view of the espresso machine of the present invention, in the step of loading a new coffee pod C;
Fig. 11 is a cross-sectional view of the same espresso machine, taken along line II-II of Fig. 10;
Fig. 12 is a cross-sectional view similar to Fig. 11, wherein the espresso machine is in the step of emptying and squashing the coffee pod C;
Fig. 13 is a perspective view of the left side of the espresso machine of Fig. 10;
Fig. 14 is a cross-sectional view similar to Fig. 11, wherein the espresso machine is in the step of discharging the empty squashed coffee pod C;
Fig. 15 is a perspective view of the left side of the espresso machine of the present invention, in the step illustrated in Fig. 14;
Fig. 16 is a cross-sectional view similar to Fig. 11, wherein the espresso machine is in the step of dispensing the espresso drink;
Fig. 17 is a cross-sectional view similar to Fig. 11, wherein the espresso machine is in the step of rotating the extraction cylinder;
Fig. 18 is a perspective view of the left side of the espresso machine of the present invention, with exploded parts of the extraction cylinder and its relative drive;
Fig. 19 is a cross-sectional view taken along line X-X of Fig. 20, wherein the espresso machine is in the step of ejecting the spent coffee dregs; and
Fig. 20 is a rear elevation view of the espresso machine of the present invention.

### DETAILED DESCRIPTION OF THE PREFERRED EMBODIMENT

In order to solve the problem indicated above, an espresso machine which operates according to an extremely innovative operating principle is provided according to the present invention. In such espresso machine, in fact, the pod is used only as a mere container of ground coffee; which means that in the first step of the process of making an espresso, the pod is opened, emptied of its ground coffee content in a dry condition, and then squashed and ejected into a recovery container for the collection of the used, emptied, and squashed pods. The ground coffee is supplied, instead, to an extraction block where it is treated in a per se known way for preparing the espresso drink, and then discharged into a separate recovery container for the collection of spent coffee dregs, thus obtaining a desired and complete separation of the two components of the pod. Also, this result is achieved with no need of direct involvement of the user who does nothing but use the pod in a completely traditional manner, enjoying the relative advantages, and eventually finds the two pod components already perfectly separated into two distinct containers, thus being enabled to properly dispose of them in a separate manner, i.e., the spent coffee dregs as a compostable fraction, and the metal or plastic pod body as a recyclable fraction.

In order to achieve this object, the espresso machine according to the present invention takes advantage of components which are already well known in the various types of espresso machines with pods and coffee beans, respectively, both for the devices of pod retention/ejection and for the devices extracting the espresso drink from the ground coffee; due to this reason, such components are synthetically described in a first part of the present description, i.e. by simply indicating their function and arrangement, since a person skilled in the art is fully capable of using the aforementioned known devices in an obvious way in the espresso machine according to the present invention. In the second part of the present description, a preferred exemplary embodiment of the espresso machine of the present invention will then be provided, wherein the innovative pod opening function and ground coffee removal is also perfectly integrated with the subsequent functions of coffee dispensing and spent coffee dregs ejection, which functions have in fact been revised in an original way to provide an espresso machine with a highly compact and efficient structure.

For ease of description, reference will be made in the following to embodiments of espresso machines which make use of aluminium pods. Based on the information provided below, a person of ordinary skill in the art can easily develop other suitable embodiments of such machines tailoring it for other types of pods, such embodiments being therefore all equally included within the scope of protection of the invention.

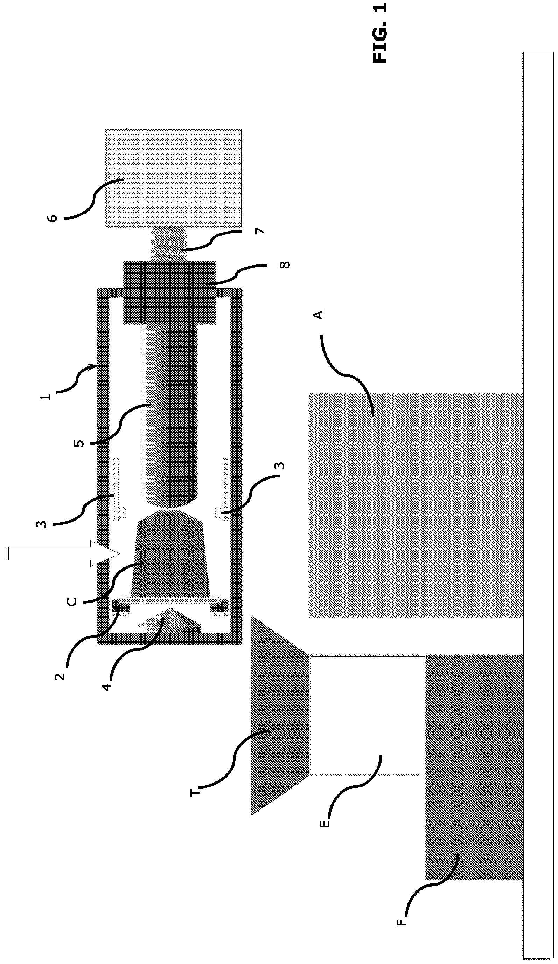

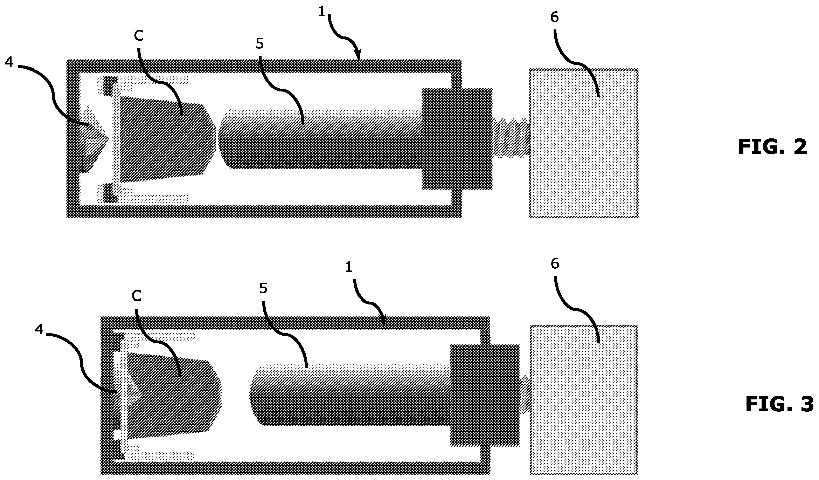

Fig. 1 shows a general diagram with functional blocks of the espresso machine of the present invention, including a moving drawer 1 which is the device for opening and emptying coffee pods C. Inside the moving drawer 1 a fixed housing seat 2, wherein a coffee pod C is subsequently inserted, and a respective locking lever 3, are provided to this purpose. At the moment of use, a coffee pod C is inserted into the housing seat 2, preferably from above, in the direction indicated by the arrow, while the locking lever 3 is in the open position, and then the coffee pod C is locked in position by shifting the locking lever 3 into a tightening position, as illustrated in Fig. 2.

In order to open and empty the coffee pod C, one end of the moving drawer 1 is equipped with a punch 4 and the opposite end with a loading piston 5, both integral with the moving drawer 1 walls. Furthermore, the moving drawer 1 is moved to the various work positions by a fixed rotary electric motor 6, which drives a screw/nut 7/8 assembly wherein the screw 7 is housed free to rotate inside the loading piston 5 and the nut 8 is integral with the body of drawer 1. As an alternative to that illustrated above, other types of linear actuators can obviously be used, provided that they are able to accurately move the moving drawer 1 to the different work positions described hereinafter.

In a first operating step, which is illustrated in Fig. 3, the moving drawer 1 is moved to the right in the drawing, until the punch 4 enters the bottom closing film of the coffee pod C. The punch 4 is equipped with shaped blades which cut the closing film mentioned above in such a way as to divide it into a plurality of free flaps, one end of each flap remaining attached to the coffee pod C edge.

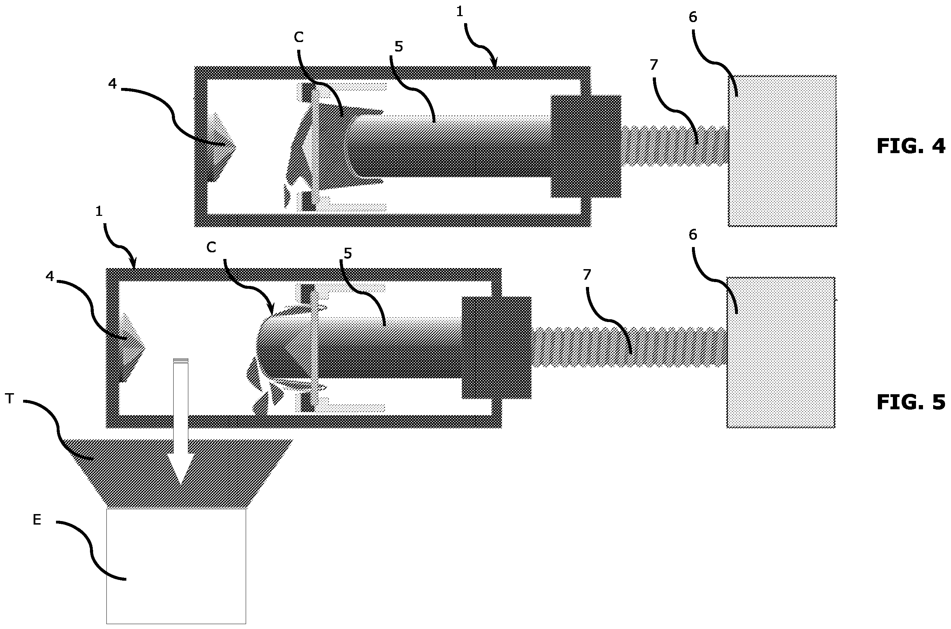

When the step of opening the coffee pod C is so completed, the moving drawer 1 is moved to the opposite direction, i.e., to the left in the drawings, to start the step of emptying the coffee pod C. To be sure that all the ground coffee comes out, such emptying is preferably carried out by completely turning inside out the coffee pod C side walls, as clearly illustrated in Figs. 4-6 which illustrate successive steps of the loading piston 5 movement, making the coffee pod C side walls to turn inside out by pressing them from the outside, thus fulfilling a complete emptying of the ground coffee contained therein. The coffee than falls through a proper opening in the drawer 1 and into a hopper T, which then supplies it to the extraction block E. In this respect, it should be noted that, according to a key feature of the invention, the coffee pod C is emptied before the espresso drink extraction, which means when the ground coffee is still perfectly dry and therefore it easily falls off from the coffee pod C inside walls.

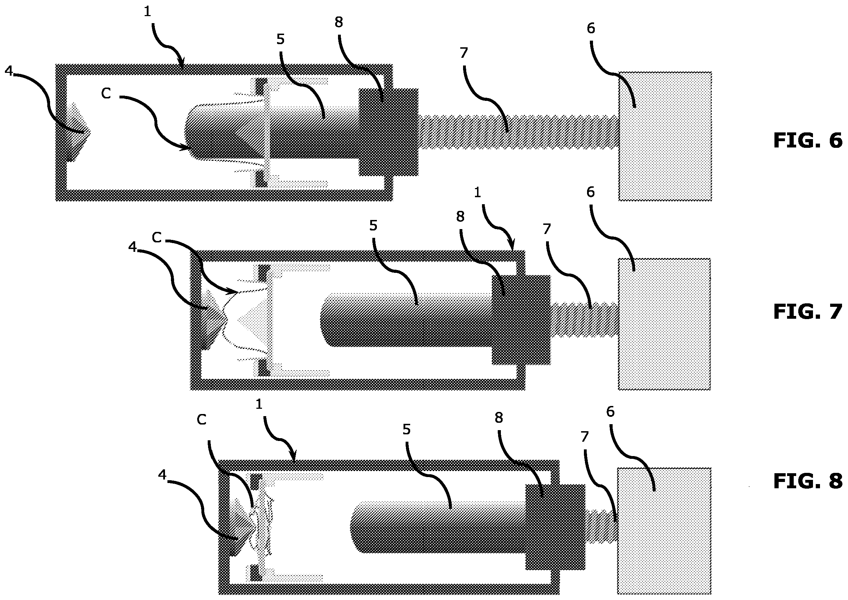

At this point, while the extraction block E provides for the espresso drink extraction in a per se known way, the motor 6 rotates in the opposite direction bringing the moving drawer 1 back to the right in the drawings, thus causing a gradual folding of the coffee pod C walls turned inside out through the same punch 4, until squashing them into a substantially flattened shape of minimum bulk, as schematically illustrated in Figs. 7 and 8.

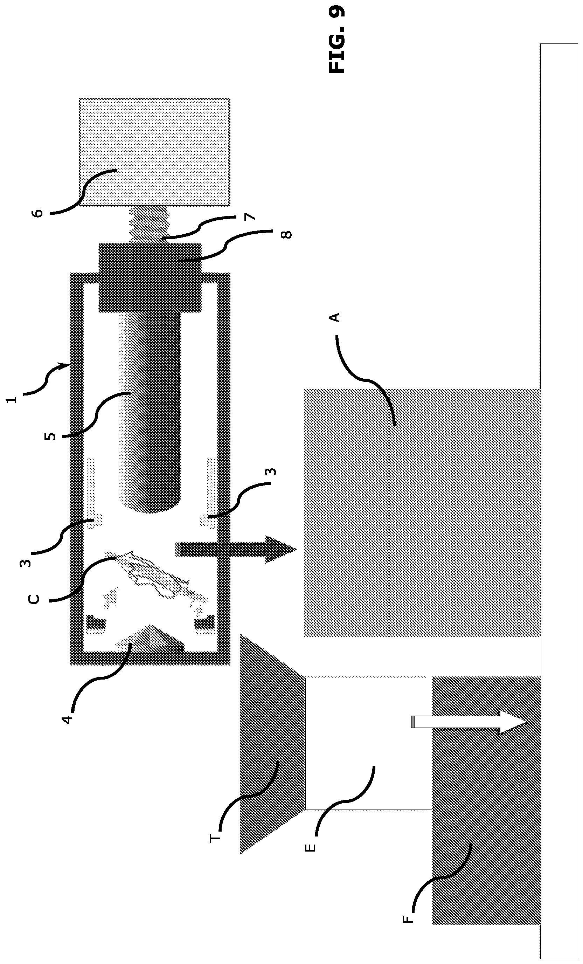

Fig. 9 illustrates the final step of preparing an espresso drink, wherein the empty squashed coffee pod C is released, by bringing the locking lever 3 into its open position, and ejected by the punch 4 into the collection container A. Meanwhile, the spent coffee dregs are discharged from the extraction block E into a separate collection container F. The fixed housing seat 2 can be the same area of the coffee pod C detachment and falling (ejection by simple gravity fall), after it has been squashed by the punch 4. However, the fixed housing seat 2 is preferably provided with a movable part which acts as a coffee pod C ejection device, thus avoiding any possibility that the empty squashed pod C may remain adherent by friction to the housing seat 2 or to the punch 4 itself as a result of to the undergone deformation.

A preferred embodiment of the espresso machine of the present invention will now be described, which includes innovative mechanical solutions both for the part relating the emptying of the coffee pod C and the steps of extracting the coffee and discharging the spent coffee dregs. It is understood that even this more detailed embodiment is for illustrative purposes only of a preferred implementation of the invention, which is therefore not limited thereto.

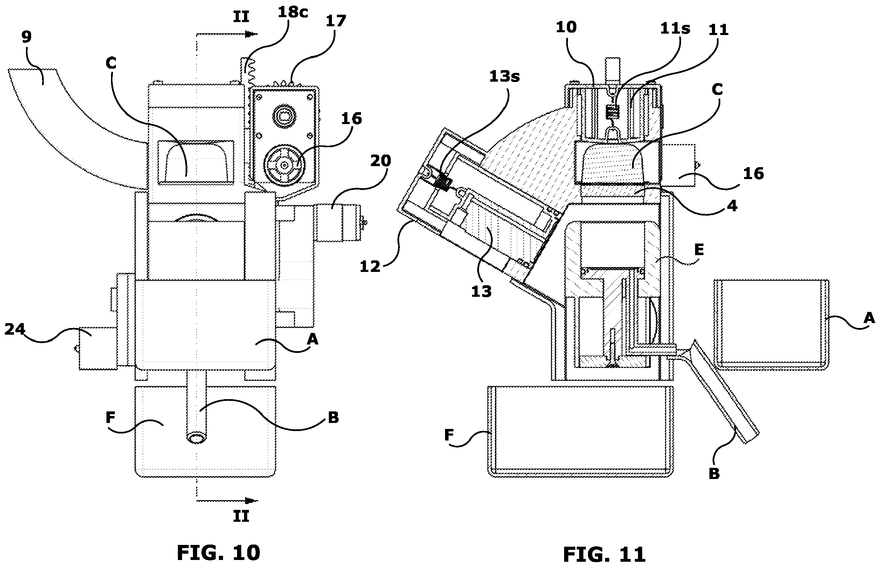

Fig. 10 and Fig. 11 illustrate a front view and a corresponding cross-sectional view of the espresso machine of the present invention, respectively. Such espresso machine includes at its upper part a slide 9 for inserting the coffee pods C, a loading cylinder 10 and an infusion cylinder 12, and an extraction cylinder E at its lower part. As described in relation to the first embodiment, also in this case the espresso machine includes a container of empty squashed pods A wherein the coffee pods C emptied of the coffee powder and squashed to reduce their size are collected, and a coffee dregs container F wherein the spent coffee dregs P_{E} coming from the extraction cylinder E are collected.

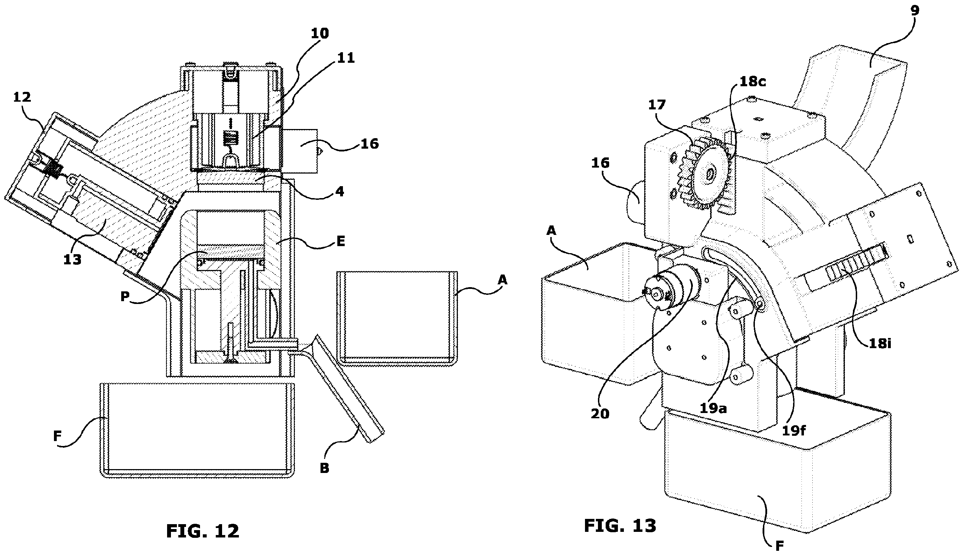

The operations of emptying the coffee pod C of the coffee powder P and squashing it to reduce its bulk take place in the loading cylinder 10, while the operation of infusing hot water on the coffee powder P for brewing the espresso drink takes place in the infusion cylinder 12. In order to reduce the espresso machine bulk, while keeping strictly separated a dry area of the espresso machine intended for the coffee powder removal from pods C, and a wet area of the espresso machine intended for the coffee drink brewing, according to a main feature of the present embodiment, the loading cylinder 10 and the infusion cylinder 12 are mutually integral and form a cylinder assembly rotating on the espresso machine body, thus allowing the loading cylinder 10 and the infusion cylinder 12 to be alternately brought in vertical alignment above the extraction cylinder E. The above-described cylinder assembly is rotated by a cylinder gearmotor 20 (Fig. 13) and its travel stroke is limited by a mechanical limit stop 19f which is integral with the body machine and moves inside an arched slot 19a formed in the rotating cylinder assembly.

This mechanical configuration makes it possible to effectively achieve the objects indicated above and, at the same time, to carry out the operations of emptying the pod C and loading the extractor group E when the loading cylinder 10 is in a position of vertical alignment above the extraction cylinder E, and the operations of infusing hot water and discharging the empty squashed pod C, when the infusion cylinder 12 is in a position of vertical alignment above the extraction cylinder E and the loading cylinder 10 is in a tilted position. All these operations are thus highly assisted by the fact that the direction of movement from time to time desired for the moving parts - i.e., coffee powder, infusion water and empty squashed pod - corresponds with the gravity direction.

In the espresso machine loading step, a coffee pod C is introduced into the slide 9 (Fig. 10) and goes to place itself by gravity in a suitable seat provided inside the loading cylinder 10, below a loading piston 11 which is movable within said loading cylinder 10. The coffee pod C seat inside the loading cylinder 11 can include means to temporarily secure and/or to position the coffee pod C in a predefined position, securing means which are well known per se and are therefore neither described nor illustrated in the drawings here for the sake of simplicity.

The movement of the loading piston 11 is driven by a piston gearmotor 16, by means of a toothed wheel 17 and a rack 18c integral with the loading piston 11; the action of the piston gearmotor 16 is in contrast to spring means 11s which tend to bring the loading piston 11 back to its rest position corresponding to the top dead end of its stroke. The selected drive is suitable to be very effectively used as the only drive of both cylinders of the rotating cylinder assembly, since the rotational movement of said cylinder assembly enables the lateral disengagement of the rack 18c from the toothed wheel 17 and the subsequent engagement of this latter in the rack 18i which is integral with the infusion piston 13 movable within the infusion cylinder 12, whose function will be better described below.

In order to open and empty the coffee pod C, a punch 4 formed by a series of suitably shaped and spaced blades is placed inside the loading cylinder 10 and just below the coffee pod C housing seat, so as to allow the closing film of the coffee pod C to be cut and the ground coffee P to pass therebetween. As a matter of fact, as the loading piston 11 is moved downwards by the piston gearmotor 16, it progressively presses the coffee pod C against the punch 4, causing the closing film of the pod C to be cut and consequently the ground coffee P to be emptied out, and then the walls of the pod C itself to progressively fold against the punch 4, until the empty coffee pod C is squashed into a substantially flattened shape of minimum bulk, as schematically illustrated in the drawings.

During such operation, the ground coffee P falls by gravity from the coffee pod C into the underlying loading compartment of the extraction cylinder E (Fig. 12), placing itself on top of a plate coffee filter which makes up its bottom, while the closing film of the pod C is divided into a plurality of free flaps, one end of each flap remaining attached to the edge of the pod C, to be later disposed with the same.

It should be particularly noted that, also in this case, the pod C is emptied before the operation of extraction of the espresso drink, which means when the ground coffee is still perfectly dry and therefore falls off in full, with great ease, from the inner walls of the pod C.

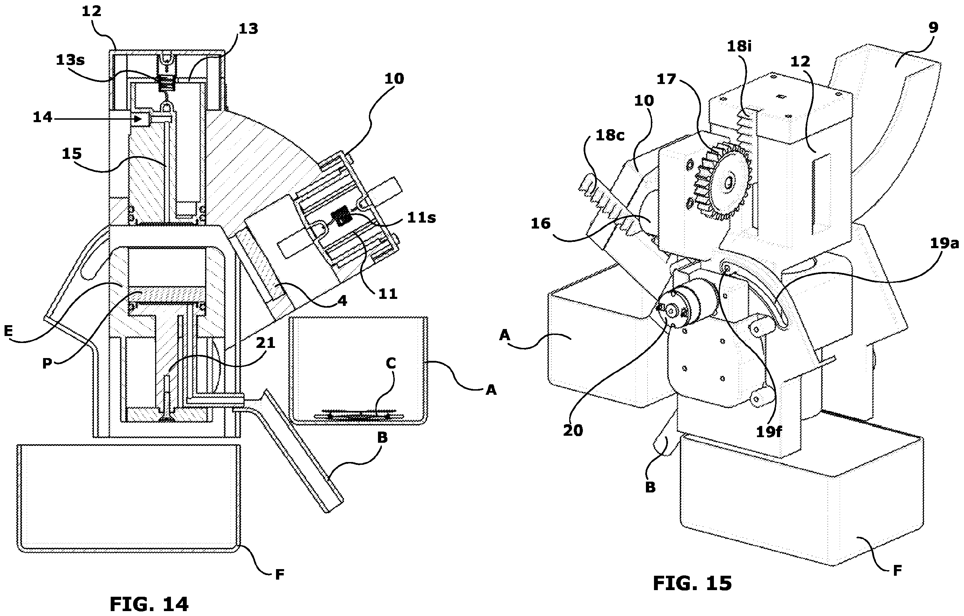

Once completed the step of loading the ground coffee P into the extraction cylinder E, the cylinder gearmotor 20 is operated to drive the cylinder assembly into rotation from the position illustrated in Fig. 12 to that of Fig. 14, i.e., where the infusion cylinder 12 has been moved Into vertical alignment with the extraction cylinder E, while the loading cylinder 10 has consequently leaved this position and arranged itself - in a laterally tilted position by an angle corresponding to the rotation performed, e.g. 60° - above the container of empty squashed pods A. In this position the rack 18c integral with the loading piston 11 is free from its engagement with the toothed wheel 17 (Fig. 15) and the loading piston 11 is thus securely maintained at its top dead end by the spring 11s. The empty squashed pod C, resting on the punch 4 is thus free to fall by gravity into the container of empty squashed pods A; the detachment of the empty pod C from the punch 4 is also facilitated by the slight impact determined by the contact between the limit stop 19f integral with the espresso machine body and the end of the slot 19a.

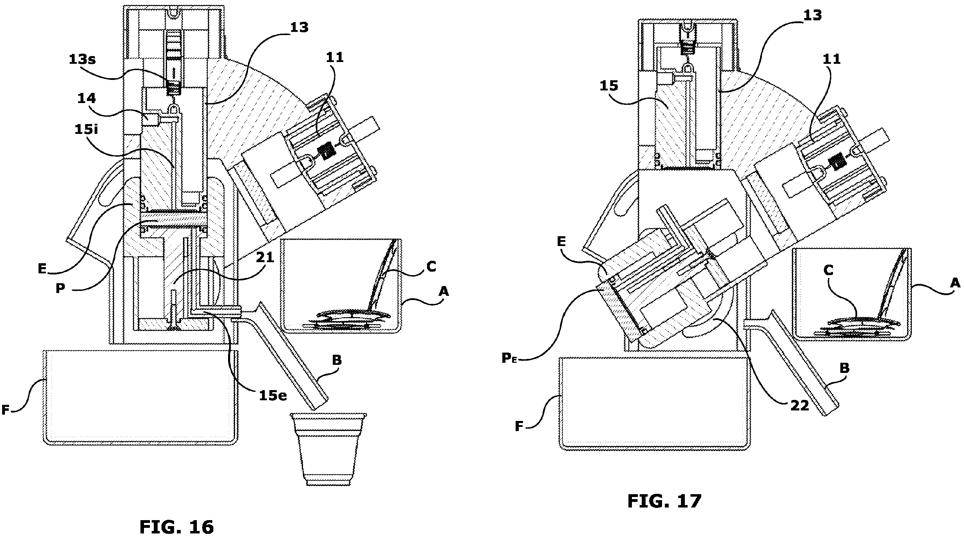

In this new position of the cylinder assembly, the toothed wheel 17 of the cylinder gearmotor 16 is engaged with the rack 18i integral with the infusion cylinder 13, so that actuation of said cylinder gearmotor 16 can also cause the infusion piston 13 to lower in contrast to its respective spring means 13s to the position illustrated in Fig. 16, wherein the bottom surface of the infusion piston 13 is in contact, at a desired pressure, with the ground coffee P load. The hot water infusion process occurs at this lowered position of the infusion piston 13; hot water is introduced through an inlet 14 into a channel 15 inside the infusion piston 13 and to a hot water diffuser which is extended over the bottom surface of the infusion piston 13 and in contact with the ground coffee P. The coffee drink thus obtained is collected by the outlet duct 15e, formed within the extraction cylinder E which leads it to the mouth of a dispensing spout B from whose free end the user can thus collect the espresso drink in a small glass or cup. After the dispensing operation is completed, the infusion piston 13 is brought back to its top dead end, freeing the extraction cylinder E, and enabling the step of ejecting the spent coffee dregs P_{E}.

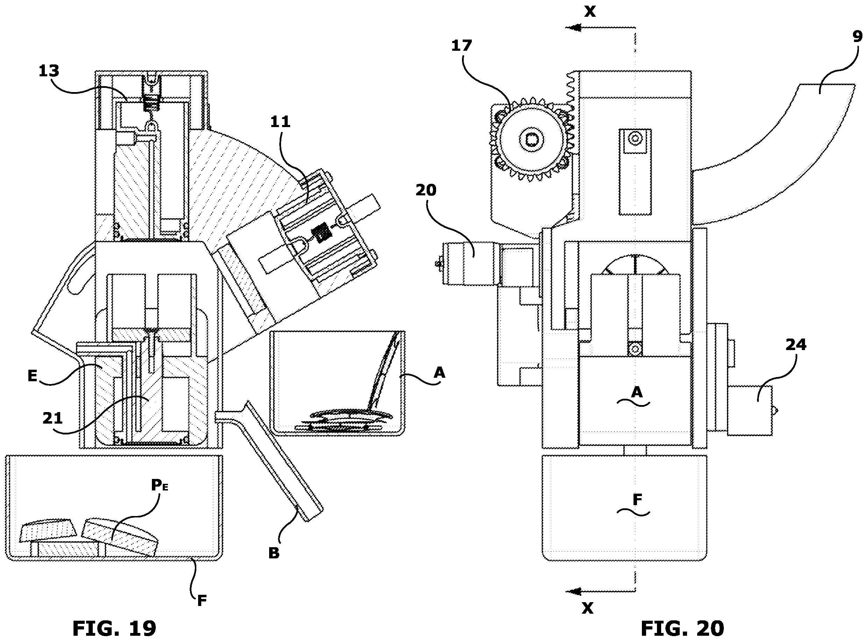

To allow an easy, complete, and automatic ejection of the spent coffee dregs P_{E}, the base of the extraction cylinder E - which is the portion carrying the plate filter onto which the ground coffee P is loaded - makes up the head of an ejection piston 21 movable within the extraction cylinder E, which ejection piston 21 also houses the outlet duct 15e. The ejection piston 21 is movable from a position of ground coffee P loading, wherein the ejection piston 21 head is at the bottom of the extraction cylinder E (Fig. 16) to a position of spent coffee dregs P_{E} discharge, wherein the ejection piston 21 head has moved to the top of the extraction cylinder E, while the extraction cylinder E has rotated to a completely overturned position (Fig. 19).

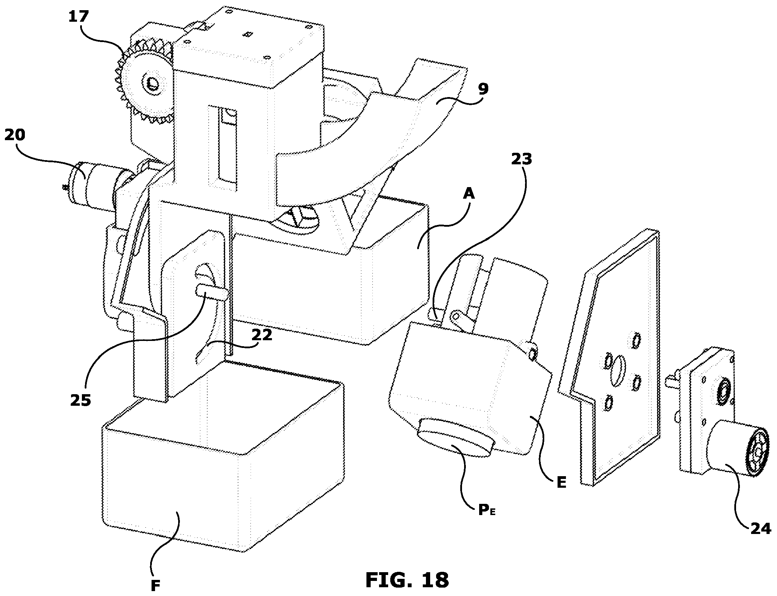

As a matter of fact, as illustrated in Fig. 17, and in Fig. 18 with exploded parts, the extraction cylinder E rotates about a pivot 25 integral with the espresso machine body and its rotation is driven by an ejection gearmotor 24 which drives into rotation the extraction cylinder E from the position illustrated in Fig. 16 wherein the espresso drink extraction occurs, to the position illustrated in Figs. 19 and 20 wherein the spent coffee dregs P_{E} are ejected into the coffee dregs container F, through several intermediate positions such as those illustrated in Figs. 17 and 18. The rotation of the extraction cylinder E causes the simultaneous movement of the ejection piston 21, due to the interaction between a pin 23, integral with the ejection piston 21, and a slot cam 22 formed in the body of the espresso machine and having an asymmetric spiral pattern with respect to the pivot 25. In this way, as the extraction cylinder E rotates, the pin 23 progressively moves away from the rotational axis of the extraction cylinder E, dragging in its movement also the ejection piston 21. In this final position, the spent coffee dregs P_{E} are completely out of the extraction cylinder E side walls, thus easily falling off the head of the ejection piston 21 and down into the underlying coffee dregs container F, by their own weight.

Once the spent coffee dregs P_{E} have fallen into the coffee dregs container F, the ejection gearmotor 24 returns the extraction cylinder E back to the loading position, while the cylinder gearmotor 20 returns the cylinder assembly to the position wherein the loading cylinder 11 is vertically aligned above the dispensing cylinder, as illustrated in Figs. 10 and 11, and thus the espresso machine is ready again for a new cycle of espresso drink extraction.

The various operating steps illustrated above and specifically the operation of the piston gearmotor 16, the cylinder gearmotor 20, the hot water supply 14 and the ejection gearmotor 25, are controlled in a per se well-known manner and according to a predetermined program, by a dedicated processor provided within the espresso machine.

From the foregoing description it is clear how the espresso machine according to the present invention has fully achieved the desired objects, fully taking advantage of the benefits of the system for packaging and distributing ground coffee in pods, while avoiding its related drawbacks, since the components of the coffee pod C are separated just before the step of wet extraction of the espresso drink, in a special "dry" portion of the espresso machine, and then collected in separate containers, so that the user can later properly dispose of them with greatest ease without need of intervention on the empty squashed coffee pod C.

However, it is understood that the invention should not be considered as limited to the specific arrangements illustrated above, which are only exemplary embodiments thereof, but that different variants are possible all within the reach of a person skilled in the art, in order to adapt the machine to the different types of coffee pods available on the market, without thereby departing from the scope of protection of the invention itself, which is only defined by the following claims.

## Claims

1. A machine for preparing espresso drinks from ground coffee packaged in coffee pods (C) by means of an extraction block (E) and further provided with a coffee dregs container (F) and an empty pod container (A) **characterized in that** it comprises an opening and emptying device (4, 10, 11) which opens and empties coffee pods (C) in a dry condition and supplies the ground coffee (P) contained therein to said extraction block (E) to dispense an espresso drink, **and in that** the spent coffee dregs (P_{E}) coming from said extraction block (E) are collected in said coffee dregs container (F) and the empty coffee pods (C) coming from said opening and emptying device (4, 10, 11) are collected in said empty pod container (A).

2. The espresso machine of claim 1, wherein said opening and emptying device of the coffee pods (C) comprises a punch (4) for opening an openable portion of a coffee pod (C), and a loading piston (5, 11), for loading the ground coffee (P), which loading piston progressively compresses a portion of the coffee pod (C) opposite to the opening one, to empty said coffee pod (C) and eventually squash it against said punch (4), said punch (4) comprising one or more spaced apart blades, suitable for cutting the coffee pod (C) openable portion and allowing the ground coffee (P) to pass therebetween.

3. The espresso machine of claim 2, wherein said opening punch (4) and said loading piston (5) are integral with two opposite walls of a moving drawer (1) within which said coffee pods (C) are subsequently inserted, in a respective fixed housing seat (2).

4. The espresso machine of claim 3, furthermore comprising a locking lever (3), which is movable between an open position, wherein said coffee pods (C) can be inserted into the housing seat (2), and a tightening position, wherein said locking lever (3) fastens said coffee pods (C) in position against said housing seat (2).

5. The espresso machine of claim 4, wherein said moving drawer (1) is driven in its displacement by a linear actuator device.

6. The espresso machine of claim 5, wherein said linear actuator consists of a fixed rotary electric motor which drives into rotation a worm screw (7) coupled with a nut (8) integral with said moving drawer (1).

7. The espresso machine of claim 2, wherein the ground coffee removed from the pod (C) by said loading piston (5) is collected by a hopper (T) and supplied to said extraction block (E) .

8. The espresso machine of any one of claims 3 to 6 wherein said pod (C) is an aluminium pod, **characterized in that** in a first work position of said moving drawer (1) said punch (4) partly cuts the bottom closing film of the pod (C) thus dividing it into flaps, one end of said flaps remaining attached to the edge of the pod (C).

9. The espresso machine of claim 8, wherein in a second opposite work position of said moving drawer (1) said extractor piston (5) causes the pod (C) to be emptied of the ground coffee, by completely turning inside out its side walls.

10. The espresso machine of claim 9, wherein in a third work position, corresponding to said first work position, said punch (4) causes the folding and squashing of the empty pod (C) turned inside out before its ejection into said second collection container (A), by simple fall or through an ejector device.

11. Espresso machine of claim 2, wherein said punch (4) is arranged at the base of a loading cylinder (10) within which said loading piston (11) is movable, a housing seat (2) for said coffee pods (C) being further provided inside the loading cylinder (10), between said loading piston (11) and said punch (4).

12. Espresso machine of claim 11, wherein said loading piston (11) is driven in its movement by a linear actuator consisting of a piston gearmotor (16) which drives into rotation a toothed wheel (17) coupled with a rack (18c) integral with said loading piston (11).

13. Espresso machine of claim 12, wherein said loading cylinder (10) is vertically aligned above said extraction block (E) and the ground coffee (P) removed from the coffee pod (C) by means of said loading piston (4) falls directly inside said extraction block (E).

14. Espresso machine of any one of the preceding claims 11 to 13, further including an infusion cylinder (12) within which an infusion piston (13) is movable, said infusion cylinder (12) being apt to alternately exchange position with the loading cylinder (10), in vertical alignment above the extraction block (E), and including a hot water inlet (14) connected to a hot water diffuser extended over the bottom side of the infusion piston (13) and intended to come into contact with the ground coffee (P).

15. Espresso machine of claim 14, wherein said infusion piston (13) is driven into its movements by the same piston gearmotor (16) which drives the movements of said loading piston (11) through the coupling between the toothed wheel (17) and a rack (18i) integral with said infusion piston (11).

16. Espresso machine of claims 14 or 15, wherein said loading cylinder (10) and said infusion cylinder (12) are made as an integral cylinder assembly, rotating on the espresso machine body, and driven into rotation by a cylinder gearmotor (20).

17. Espresso machine of claim 16, wherein the empty pod (C) squashed by the loading cylinder (10) is discharged into the empty pod container (A) in a position of the cylinder assembly where said infusion cylinder (12) is vertically aligned over the extraction block (E) and said loading cylinder (10) is tilted above said empty pod container (A).

18. Espresso machine of any one of the preceding claims 11 to 17, wherein said extraction block consists of an extraction cylinder (E) into which an ejection piston (21) is movable, wherein the head of the ejection piston (21) makes up the bottom of the extraction cylinder (E) and carries a plate filter onto which the ground coffee (P) coming from said loading cylinder (10) is loaded.

19. Espresso machine of claim 18, wherein said extraction cylinder (E) can rotate on the espresso machine body and is driven into rotation by an ejection gearmotor (24), between a first position where the espresso drink extraction takes place and a second position, at least partially overturned, where ejection of the spent coffee dregs (P_{E}) into the coffee dregs container (F) takes place, wherein the extraction cylinder (E) rotation causes the simultaneous movement of the ejection piston (21) from a loading position of ground coffee (P), at the bottom of the extraction cylinder (E), to an ejection position of spent coffee dregs (P_{E}), at the top of the extraction cylinder (E), due to the interaction between a pin (23) integral with the ejection piston (21) and a slot cam (22), integral with the espresso machine body and having an asymmetric spiral pattern with respect to the pivot (25) about which said extraction cylinder (E) rotates.

## Patentansprüche

1. Maschine zum Zubereiten von Espressogetränken aus gemahlenem Kaffee, der in Kaffeekapseln (C) verpackt ist, mittels eines Extraktionsblocks (E) und ferner versehen mit einem Kaffeesatzbehälter (F) und einem Leerkapselbehälter (A), **dadurch gekennzeichnet, dass** sie eine Öffnungs- und Entleerungsvorrichtung (4, 10, 11) umfasst, die Kaffeekapseln (C) in einem trockenen Zustand öffnet und entleert und den darin enthaltenen gemahlenen Kaffee (P) dem Extraktionsblock (E) zuführt, um ein Espressogetränk abzugeben, **und dadurch, dass** der verbrauchte Kaffeesatz (P_{E}), der von dem Extraktionsblock (E) kommt, in dem Kaffeesatzbehälter (F) gesammelt wird und die leeren Kaffeekapseln (C), die von der Öffnungs- und Entleerungsvorrichtung (4, 10, 11) kommen, in dem Leerkapselbehälter (A) gesammelt werden.

2. Espressomaschine nach Anspruch 1, wobei die Öffnungs- und Entleerungsvorrichtung der Kaffeekapseln (C) einen Stempel (4) zum Öffnen eines zu öffnenden Abschnitts einer Kaffeekapsel (C) und einen Ladekolben (5, 11) zum Laden des gemahlenen Kaffees (P) umfasst, wobei der Ladekolben einen Abschnitt der Kaffeekapsel (C), der dem zu öffnenden Abschnitt gegenüberliegt, progressiv zusammendrückt, um die Kaffeekapsel (C) zu entleeren und sie schließlich gegen den Stempel (4) zu quetschen, wobei der Stempel (4) eine oder mehrere beabstandete Klingen umfasst, die geeignet sind, den zu öffnenden Abschnitt der Kaffeekapsel (C) zu schneiden und dem gemahlenen Kaffee (P) zu ermöglichen, dazwischen hindurchzutreten.

3. Espressomaschine nach Anspruch 2, wobei der Öffnungsstempel (4) und der Ladekolben (5) einstückig mit zwei gegenüberliegenden Wänden einer beweglichen Schublade (1), in die die Kaffeekapseln (C) anschließend eingesetzt werden, in einem jeweiligen festen Gehäusesitz (2) sind.

4. Espressomaschine nach Anspruch 3, ferner umfassend einen Verriegelungshebel (3), der zwischen einer offenen Position, in der die Kaffeekapseln (C) in den Gehäusesitz (2) eingesetzt werden können, und einer Festziehposition, in der der Verriegelungshebel (3) die Kaffeekapseln (C) in Position gegen den Gehäusesitz (2) befestigt, beweglich ist.

5. Espressomaschine nach Anspruch 4, wobei die bewegliche Schublade (1) in ihrer Verschiebung durch eine lineare Aktuatorvorrichtung angetrieben wird.

6. Espressomaschine nach Anspruch 5, wobei der lineare Aktuator aus einem festen rotierenden Elektromotor besteht, der eine Schneckenschraube (7) in Drehung versetzt, die mit einer Mutter (8) gekoppelt ist, die einstückig mit der beweglichen Schublade (1) ist.

7. Espressomaschine nach Anspruch 2, wobei der gemahlene Kaffee, der durch den Ladekolben (5) aus der Kapsel (C) entfernt wird, durch einen Trichter (T) gesammelt und dem Extraktionsblock (E) zugeführt wird.

8. Espressomaschine nach einem der Ansprüche 3 bis 6, wobei die Kapsel (C) eine Aluminiumkapsel ist, **dadurch gekennzeichnet, dass** in einer ersten Arbeitsposition der beweglichen Schublade (1) der Stempel (4) den Bodenschließfilm der Kapsel (C) teilweise schneidet, wodurch er in Klappen geteilt wird, wobei ein Ende der Klappen an der Kante der Kapsel (C) befestigt bleibt.

9. Espressomaschine nach Anspruch 8, wobei in einer zweiten gegenüberliegenden Arbeitsposition der beweglichen Schublade (1) der Extraktionskolben (5) bewirkt, dass die Kapsel (C) durch vollständiges Umdrehen ihrer Seitenwände aus dem gemahlenen Kaffee entleert wird.

10. Espressomaschine nach Anspruch 9, wobei in einer dritten Arbeitsposition, die der ersten Arbeitsposition entspricht, der Stempel (4) das Falten und Quetschen der leeren Kapsel (C), die vor ihrem Ausstoßen in den zweiten Sammelbehälter (A) umgedreht wurde, durch einfaches Fallen oder durch eine Ausstoßvorrichtung bewirkt.

11. Espressomaschine nach Anspruch 2, wobei der Stempel (4) an der Basis eines Ladezylinders (10) angeordnet ist, in dem der Ladekolben (11) beweglich ist, wobei ferner ein Gehäusesitz (2) für die Kaffeekapseln (C) im Ladezylinder (10) zwischen dem Ladekolben (11) und dem Stempel (4) bereitgestellt ist.

12. Espressomaschine nach Anspruch 11, wobei der Ladekolben (11) in seiner Bewegung durch einen linearen Aktuator angetrieben wird, der aus einem Kolbengetriebemotor (16) besteht, der ein Zahnrad (17) in Drehung versetzt, das mit einer Zahnstange (18c) gekoppelt ist, die einstückig mit dem Ladekolben (11) ist.

13. Espressomaschine nach Anspruch 12, wobei der Ladezylinder (10) vertikal über dem Extraktionsblock (E) ausgerichtet ist und der gemahlene Kaffee (P), der mittels des Ladekolbens (4) aus der Kaffeekapsel (C) entfernt wird, direkt in den Extraktionsblock (E) fällt.

14. Espressomaschine nach einem der vorhergehenden Ansprüche 11 bis 13, ferner umfassend einen Infusionszylinder (12), in dem ein Infusionskolben (13) beweglich ist, wobei der Infusionszylinder (12) in der Lage ist, abwechselnd Position mit dem Ladezylinder (10) in vertikaler Ausrichtung über dem Extraktionsblock (E) auszutauschen, und umfassend einen Heißwassereinlass (14), der mit einem Heißwasserdiffusor verbunden ist, der sich über die Unterseite des Infusionskolbens (13) erstreckt und dazu bestimmt ist, mit dem gemahlenen Kaffee (P) in Kontakt zu kommen.

15. Espressomaschine nach Anspruch 14, wobei der Infusionskolben (13) durch denselben Kolbengetriebemotor (16), der die Bewegungen des Ladekolbens (11) durch die Kopplung zwischen dem Zahnrad (17) und einer mit dem Infusionskolben (11) einstückigen Zahnstange (18i) antreibt, in seine Bewegungen angetrieben wird.

16. Espressomaschine nach Anspruch 14 oder 15, wobei der Ladezylinder (10) und der Infusionszylinder (12) als eine einstückige Zylinderanordnung hergestellt sind, die sich auf dem Espressomaschinenkörper dreht und durch einen Zylindergetriebemotor (20) in Drehung angetrieben wird.

17. Espressomaschine nach Anspruch 16, wobei die leere Kapsel (C), die durch den Ladezylinder (10) zerdrückt wird, in den Behälter (A) für leere Kapseln in einer Position der Zylinderanordnung abgegeben wird, in der der Infusionszylinder (12) vertikal über dem Extraktionsblock (E) ausgerichtet ist und der Ladezylinder (10) über dem Behälter (A) für leere Kapseln geneigt ist.

18. Espressomaschine nach einem der vorhergehenden Ansprüche 11 bis 17, wobei der Extraktionsblock aus einem Extraktionszylinder (E) besteht, in dem ein Auswurfkolben (21) bewegbar ist, wobei der Kopf des Auswurfkolbens (21) den Boden des Extraktionszylinders (E) bildet und einen Plattenfilter trägt, auf den der gemahlene Kaffee (P), der aus dem Ladezylinder (10) kommt, geladen wird.

19. Espressomaschine nach Anspruch 18, wobei sich der Extraktionszylinder (E) auf dem Espressomaschinenkörper drehen kann und durch einen Auswurfgetriebemotor (24) zwischen einer ersten Position, in der die Espressogetränkeextraktion stattfindet, und einer zweiten Position, die zumindest teilweise umgedreht ist, in der der Auswurf der verbrauchten Kaffeetropfen (PE) in den Kaffeetropfenbehälter (F) stattfindet, in Drehung angetrieben wird, wobei die Drehung des Extraktionszylinders (E) die gleichzeitige Bewegung des Auswurfkolbens (21) aus einer Ladeposition von gemahlenem Kaffee (P) am Boden des Extraktionszylinders (E) in eine Auswurfposition von verbrauchten Kaffeetropfen (PE) am oberen Ende des Extraktionszylinders (E) aufgrund der Wechselwirkung zwischen einem Stift (23), der mit dem Auswurfkolben (21) einstückig ist, und einem Schlitznocken (22), der mit dem Espressomaschinenkörper einstückig ist und ein asymmetrisches Spiralmuster in Bezug auf den Drehpunkt (25) aufweist, um den sich der Extraktionszylinder (E) dreht, bewirkt.

## Revendications

1. Machine pour la préparation de boissons expresse à partir de café moulu emballé dans des dosettes de café (C) au moyen d'un bloc d'extraction (E) et doté en outre d'un contenant de marc de café (F) et d'un contenant de dosette vide (A), **caractérisée en ce qu'**elle comprend un dispositif d'ouverture et de vidage (4, 10, 11) qui ouvre et vide des dosettes de café (C) dans une condition sèche et fournit le café moulu (P) contenu dedans audit bloc d'extraction (E) pour distribuer une boisson expresse, **et en ce que** le marc de café usagé (P_{E}) venant dudit bloc d'extraction (E) est collecté dans ledit contenant de marc de café (F) et les dosettes de café vides (C) venant dudit dispositif d'ouverture et de vidage (4, 10, 11) sont collectées dans ledit contenant de dosette vide (A).

2. Machine à expresso selon la revendication 1, dans laquelle ledit dispositif d'ouverture et de vidage des dosettes de café (C) comprend un poinçon (4) pour l'ouverture d'une partie ouvrable d'une dosette de café (C), et un piston de chargement (5, 11), pour le chargement du café moulu (P), lequel piston de chargement compresse progressivement une partie de la dosette de café (C) opposée à l'une d'ouverture, pour vider ladite dosette de café (C) et finalement l'écraser contre ledit poinçon (4), ledit poinçon (4) comprenant une ou plusieurs lames espacées, adaptées pour couper la partie ouvrable de dosette de café (C) et permettant le passage du café moulu (P) à travers celle-ci.

3. Machine à expresso selon la revendication 2, dans laquelle ledit poinçon d'ouverture (4) et ledit piston de chargement (5) sont d'un seul tenant avec deux parois opposées d'un tiroir mobile (1), dans lequel lesdites dosettes de café (C) sont insérées ultérieurement, dans un siège de logement fixe respectif (2).

4. Machine à expresso selon la revendication 3, comprenant de plus un levier de verrouillage (3) qui est mobile entre une position ouverte, dans laquelle lesdites dosettes de café (C) peuvent être insérées dans le siège de logement (2), et une position de serrage, dans laquelle ledit levier de verrouillage (3) fixe lesdites dosettes de café (C) en position contre ledit siège de logement (2).

5. Machine à expresso selon la revendication 4, dans laquelle ledit tiroir mobile (1) est entraîné dans son déplacement par un dispositif actionneur linéaire.

6. Machine à expresso selon la revendication 5, dans laquelle ledit actionneur linéaire est constitué d'un moteur électrique rotatif fixe qui entraîne en rotation une vis sans fin (7) couplée à un écrou (8) d'un seul tenant avec ledit tiroir mobile (1).

7. Machine à expresso selon la revendication 2, dans laquelle le café moulu retiré de la dosette (C) par ledit piston de chargement (5) est collecté par une trémie (T) et fourni audit bloc d'extraction (E).

8. Machine à expresso selon l'une des revendications 3 à 6, dans laquelle ladite dosette (C) est une dosette en aluminium, **caractérisée en ce que** dans une première position de travail dudit tiroir mobile (1), ledit poinçon (4) coupe partiellement le film de fermeture inférieur de la dosette (C) en le divisant ainsi en volets, une extrémité desdits volets restant attachée à l'arête de la dosette (C).

9. Machine à expresso selon la revendication 8, dans laquelle dans une deuxième position de travail opposée dudit tiroir mobile (1), ledit piston d'extracteur (5) provoque le vidage de la dosette (C) du café moulu, en retournant complètement ses parois latérales.

10. Machine à expresso selon la revendication 9, dans laquelle dans une troisième position de travail, correspondant à ladite première position de travail, ledit poinçon (4) provoque le pliage et l'écrasement de la dosette vide (C) retournée avant son éjection dans ledit deuxième contenant de collecte (A), par simple chute ou à travers un dispositif éjecteur.

11. Machine à expresso selon la revendication 2, dans laquelle ledit poinçon (4) est agencé au niveau de la base d'un cylindre de chargement (10), dans lequel ledit piston de chargement (11) est mobile, un siège de logement (2) pour lesdites dosettes de café (C) étant en outre prévu à l'intérieur du cylindre de chargement (10), entre ledit piston de chargement (11) et ledit poinçon (4).

12. Machine à expresso selon la revendication 11, dans laquelle ledit piston de chargement (11) est entraîné dans son mouvement par un actionneur linéaire constitué d'un moteur à engrenage de piston (16) qui entraîne en rotation une roue dentée (17) couplée à une crémaillère (18c) d'un seul tenant avec ledit piston de chargement (11).

13. Machine à expresso selon la revendication 12, dans laquelle ledit cylindre de chargement (10) est verticalement aligné au-dessus dudit bloc d'extraction (E) et le café moulu (P) retiré de la dosette de café (C) au moyen dudit piston de chargement (4) tombe directement à l'intérieur dudit bloc d'extraction (E).

14. Machine à expresso selon l'une des revendications précédentes 11 à 13, comportant en outre un cylindre d'infusion (12), dans lequel un piston d'infusion (13) est mobile, ledit cylindre d'infusion (12) étant apte à échanger en alternance de position avec le cylindre de chargement (10), en alignement vertical au-dessus du bloc d'extraction (E), et comportant une entrée d'eau chaude (14) connectée à un diffuseur d'eau chaude étendu sur le côté inférieur du piston d'infusion (13) et destiné à venir en contact avec le café moulu (P).

15. Machine à expresso selon la revendication 14, dans laquelle ledit piston d'infusion (13) est entraîné dans ses mouvements par le même moteur à engrenage de piston (16) qui entraîne les mouvements dudit piston de chargement (11) à travers le couplage entre la roue dentée (17) et une crémaillère (18i) d'un seul tenant avec ledit piston d'infusion (11).

16. Machine à expresso selon la revendication 14 ou 15, dans laquelle ledit cylindre de chargement (10) et ledit cylindre d'infusion (12) sont réalisés comme un ensemble de cylindre formé d'un seul tenant, tournant sur le corps de la machine à expresso, et entraîné en rotation par un moteur à engrenage de cylindre (20).

17. Machine à expresso selon la revendication 16, dans laquelle la dosette vide (C) écrasée par le cylindre de chargement (10) est évacuée dans le contenant de dosette vide (A) dans une position de l'ensemble de cylindre où ledit cylindre d'infusion (12) est verticalement aligné sur le bloc d'extraction (E) et ledit cylindre de chargement (10) est incliné au-dessus dudit contenant de dosette vide (A).

18. Machine à expresso selon l'une des revendications 11 à 17, dans laquelle ledit bloc d'extraction est constitué d'un cylindre d'extraction (E), dans lequel un piston d'éjection (21) est mobile, dans laquelle la tête du piston d'éjection (21) constitue le fond du cylindre d'extraction (E) et porte un filtre de plaque, sur lequel le café moulu (P) venant dudit cylindre de chargement (10) est chargé.

19. Machine à expresso selon la revendication 18, dans laquelle ledit cylindre d'extraction (E) peut tourner sur le corps de la machine à expresso et est entraîné en rotation par un moteur à engrenage d'éjection (24), entre une première position où l'extraction de boisson expresse se déroule et une deuxième position, au moins partiellement retournée, où l'éjection du marc de café usagé (P_{E}) dans le contenant de marc de café (F) se déroule, dans laquelle la rotation du cylindre d'extraction (E) provoque le mouvement simultané du piston d'éjection (21) d'une position de chargement du café moulu (P), au bas du cylindre d'extraction (E), à une position d'éjection de marc de café usagé (P_{E}) sur le dessus du cylindre d'extraction (E), en raison de l'interaction entre une broche (23) formée d'un seul tenant avec le piston d'éjection (21) et une came à fente (22), formée d'un seul tenant avec le corps de la machine à expresso et ayant un motif spiralé asymétrique par rapport au pivot (25) autour duquel ledit cylindre d'extraction (E) tourne.
